# EUROPÄISCHE PATENTSCHRIFT

(11) **EP 1 802 866 B1**
(45) Veröffentlichungstag und Bekanntmachung des Hinweises auf die Patenterteilung: **23.09.2009**
(21) Anmeldenummer: 05794796.2
(22) Anmeldetag: 30.09.2005
(51) Int. Cl.: F03D 9/00, H02J 3/38

(54) **WINDPARK MIT ROBUSTER BLINDLEISTUNGSREGELUNG UND VERFAHREN ZUM BETRIEB**
WIND PARK WITH ROBUST REACTIVE POWER ADJUSTMENT SYSTEM AND METHOD FOR THE OPERATION THEREOF
PARC EOLIEN POURVU D'UN REGULATEUR DE PUISSANCE REACTIVE ROBUSTE ET PROCEDE POUR FAIRE FONCTIONNER CE PARC EOLIEN

(30) Priorität: 01.10.2004 DE 102004048341
(43) Veröffentlichungstag der Anmeldung: 04.07.2007
(73) Patentinhaber: REpower Systems AG, 22335 Hamburg (DE)
(72) Erfinder: FORTMANN, Jens, 13156 Berlin (DE); LETAS, Heinz-Hermann, 23701 Süsel (DE)
(74) Vertreter: Glawe, Delfs, Moll
(86) Internationale Anmeldenummer: PCT/EP2005/010606
(87) Internationale Veröffentlichungsnummer: WO 2006/037576

(56) Entgegenhaltungen:
- EP-A- 1 512 869
- WO-A-01/73518
- WO-A-20/04025803
- RODRIGUEZ AMENEDO J L ET AL: "AUTOMATIC GENERATION CONTROL OF A WIND FARM WITH VARIABLE SPEED WIND TURBINES" IEEE TRANSACTIONS ON ENERGY CONVERSION, IEEE INC. NEW YORK, US, Bd. 17, Nr. 2, Juni 2002 (2002-06), Seiten 279-284, XP001155002 ISSN: 0885-8969
- LEDESMA P ET AL: "Contribution of variable-speed wind turbines to voltage control" WIND ENGINEERING MULTI-SCIENCE PUBLISHING UK, Bd. 26, Nr. 6, 2002, Seiten 347-358, XP002360684 ISSN: 0309-524X
- BRAUNER G: "NETZANBINDUNG VON WINDKRAFTANLAGEN" ELEKTROTECHNIK UND INFORMATIONSTECHNIK, SPRINGER VERLAG, WIEN, AT, Bd. 116, Nr. 7/8, 1999, Seiten 428-432, XP000926851 ISSN: 0932-383X
- TAPIA A ET AL: "Reactive power control of wind farms for voltage control applications" RENEWABLE ENERGY, PERGAMON PRESS, OXFORD, GB, Bd. 29, Nr. 3, März 2004 (2004-03), Seiten 377-392, XP004473191 ISSN: 0960-1481

## Beschreibung

Die Erfindung betrifft einen Windpark mit mindestens zwei Windenergieanlagen, die jeweils einen Rotor, einen damit angetriebenen Generator und eine Steuereinrichtung aufweisen und die über Verbindungsleitungen mit einer Hauptleitung verbunden sind, einer Verknüpfungsstelle, welche die Hauptleitung mit einem Energieübertragungsnetz verbindet, und einem Parkmaster, der zur Blindleistungsregelung ausgebildet ist und Kommunikationsleitungen zur Übermittlung von Steuersignalen an die Windenergieanlagen aufweist. Die Erfindung betrifft ferner ein Verfahren zum Betrieb eines solchen Windparks.

Die Entwicklung im Bereich der Windenergieanlagen ist durch einen Trend zur Größe gekennzeichnet. Das betrifft nicht nur die einzelne Windenergieanlage, sondern auch Windparks, die aus immer mehr und immer größer werdenden Windenergieanlagen gebildet sind. Die damit stark ansteigende installierte Leistung führt gerade im ländlichen Raum, wo sich die meisten und vor allem großen Windparks befinden, zu Schwierigkeiten auf Grund der begrenzten Kapazität des E-nergieübertragungsnetzes. Um eine ausreichende Versorgungsqualität aufrecht zu erhalten zu können, werden steigende Anforderungen an Windparks bezüglich ihrer Netzverträglichkeit gestellt.

Ein wichtiges Kriterium für den sicheren Betrieb am Netz ist die Stabilität der Spannung. Das gilt umso mehr bei hohen Einspeiseleistungen, also vor allem für Windparks, die an Hoch- und Höchstspannungsnetze angeschlossen sind. Es ist bekannt, dass es für die Stützung des Spannungsniveaus günstig ist, (insbesondere kapazitive) Blindleistung in das Netz einzuspeisen. Weitere wichtige Kriterien sind die Übertragungsfähigkeit der Netze wie beispielsweise die Strombelastbarkeit, Anschlusskriterien wie zum Beispiel Netzflicker und andere Wirkungen, wie Netzverluste.

Es ist bekannt, eine Messstelle für die komplexe Leistung an einem Verknüpfungspunkt des Windparks mit dem Netz vorzusehen und mittels eines Windparkleitrechners (Parkmaster) mit Sollvorgaben zum Leistungsfaktor zu vergleichen (EP-A-1 519 040, WO-A-01/73518). Der Parkmaster bestimmt daraus Leistungsfaktor- oder Blindleistungssollwerte für die einzelnen Windenergieanlagen (siehe auch "Automatic Generation Control of a Wind Farm With Variable Speed Wind Turbines" von J.L. Rodriguez-Amenedo, IEEE Trans. on Energy Conversion, Bd. 17. Nr. 2, Juni 2002, Seiten 279-284). Diese setzen die Vorgaben dann um, indem sie mehr oder weniger Blindleistung bereitstellen. Damit ändern sich aber die Spannungen und Ströme an den Leitungen und Übertragern des Windparks. Ein ähnliches Konzept mit einer verteilten Regelung ist in EP-A-1 512 869 vorgeschlagen worden. Nachteilig an den bekannten Konzepten ist, dass es insbesondere bei Windenergieanlagen, die im Windpark am Ende einer langen Leitung liegen, zu unerwünschten Spannungsanstiegen kommen kann, die zu Instabilitäten führen. Ein unerwünschtes Abschalten einzelner Windenergieanlagen oder gar Schäden an Umrichtern können die Konsequenzen sein.

Der Erfindung liegt die Aufgabe zugrunde, einen Windpark der eingangs genannten Art und ein Betriebsverfahren derart zu verbessern, dass eine bessere Netzstützung erreicht wird.

Die Lösung gemäß der Erfindung liegt in den Merkmalen der unabhängigen Ansprüche. Vorteilhafte Weiterbildungen sind Gegenstand der abhängigen Ansprüche. Erfindungsgemäß ist bei einem Windpark mit mindestens zwei Windenergieanlagen, die jeweils einen Rotor, einen damit angetriebenen Generator und eine Steuereinrichtung aufweisen und die über Verbindungsleitungen mit einer Hauptleitung verbunden sind, einer Verknüpfungsstelle, welche die Hauptleitung mit einem Energieübertragungsnetz verbindet, und einem Parkmaster, der zur Blindleistungsregelung ausgebildet ist und Kommunikationsleitungen zur Übermittlung von Steuersignalen an die Windenergieanlagen aufweist, vorgesehen, dass die Blindleistungsregelung als verteilter Regler ausgeführt ist, umfassend einen Oberregler am Parkmaster, der dazu ausgebildet ist, zur Einstellung eines globalen Leistungskoeffizienten der in das Energieübertragungsnetz abgegebenen Leistung eine Sollspannung (Usoll) zu ermitteln und als Signal über die Kommunikationsleitungen auszugeben, und Unterregler an den Windenergieanlagen, der jeweils dazu ausgebildet ist, aus dem Signal für die Sollspannung lokale Blindleistungssollwerte zu berechnen, die tatsächlich abgegebene Spannung der Windenergieanlage zu erfassen und nach Vergleich mit der Sollspannung (Usoll) die lokalen Blindleistungssollwerte zu korrigieren.

Die Erfindung beruht auf dem Gedanken, die Einstellung des gewünschten Leistungskoeffizienten mit einem Spannungshalteverfahren zu verkoppeln. Dazu ist eine verteilte Regelung vorgesehen. Der Parkmaster gibt zur Einhaltung eines bestimmten Leistungskoeffizienten gegenüber dem Energieübertragungsnetz (Netz) den einzelnen Windenergieanlagen eine bestimmte Sollspannung vor. Diese ist so von dem Oberregler berechnet, dass sich der gewünschte (globale) Leistungskoeffizient gegenüber dem Netz einstellt. Die Sollspannung wird als Signal ausgegeben und ist über die Kommunikationsleitungen an die Unterregler der einzelnen Windenergieanlagen angelegt. Die Unterregler ermitteln basierend auf dem Signal für Sollspannung selbständig lokale Blindleistungssollwerte. Mittels der Steuereinrichtung werden die Generatoren so betrieben, dass Blind- und Wirkleistung entsprechend den Vorgaben erzeugt werden. Die Ausgangsspannung wird gemessen und an den Unterregler in einer geschlossenen Regelschleife zurückgeführt. Die Steuereinrichtungen der einzelnen Windenergieanlagen stellen so - soweit möglich - die gewünschte Sollspannung ein. Der Oberregler am Parkmaster ermittelt den sich tatsächlich ergebenden Gesamtleistungsfaktor und korrigiert erforderlichenfalls die Sollspannung für die Unterregler.

Nachfolgend sollen einige verwendete Begriffe erläutert werden:

Unter dem Begriff Leistungskoeffizient wird ein Parameter verstanden, der die bei der jeweiligen Wirkleistung geforderte Blindleistung beschreibt. Dazu zählen im engeren Sinn der Leistungsfaktor cos ϕ und seine Varianten tan ϕ, sin ϕ sowie der Winkel ϕ selbst, im weiteren Sinn aber auch Vorgabewerte für die Blindleistung Q_{V} oder eine gewünschte Netzspannung U_{VN}. Letzteres ist vor allem bei größeren, direkt an das Hochspannungsnetz angeschlossenen Kraftwerken zweckmäßig. Vorzugsweise ist in einem solchen Fall im Windpark eine sogenannte Blindleistungsstatik vorgesehen, mittels welcher aus dem Vorgabewert für die gewünschte Netzspannung entsprechende Vorgabewerte für die geforderte Blindleistung bzw. den Leistungskoeffizienten bestimmt werden.

Unter einem Generator wird eine Maschine verstanden, die mechanische Energie in elektrische Energie umwandelt. Umfasst sind sowohl Gleichstrom- wie auch ein- oder mehrphasige Wechselstrommaschinen. Es kann sich um Synchron- oder Asynchronmaschinen handeln, die einfach oder doppelt gespeist sind. In der Regel weist der Generator einen Umrichter auf, zwingend ist dies jedoch nicht. Der Umrichter kann als Vollumrichter oder als Teilumrichter ausgeführt sein. Die Bauart ist beliebig, insbesondere kann er als Direktumrichter oder als Zwischenkreisumrichter ausgeführt sein.

Unter einem Windpark wird eine Gesamtheit verstanden, die aus mindestens zwei Windenergieanlagen und einer zentralen Leiteinrichtung gebildet ist. Letztere wird als Parkmaster bezeichnet. Er überwacht das Verhalten des gesamten Windparks gegenüber dem Energieversorgungsnetz, an das der Windpark angeschlossen ist. Dazu beeinflusst er den Betrieb der einzelnen Windenergieanlagen.

Der globale Leistungskoeffizient bezieht sich auf die von dem Windpark als Ganzes an das Netz abgegebene Leistung, der lokale Leistungskoeffizient auf die von der einzelnen Windenergieanlage abgegebene Leistung, ggf. unter Einschluss zugeordneter Kompensationsanlagen.

Die Erfindung hat erkannt, dass das Betriebsverhalten eines Windparks in Bezug auf seine Stabilität deutlich verbessert werden kann, wenn der Parkmaster den einzelnen Windenergieanlagen Sollspannungen vorgibt und es den Regeleinrichtungen der einzelnen Windenergieanlagen überlassen ist, basierend darauf lokal für entsprechende Blindleistungsvorgaben und ihre Umsetzung zu sorgen, so dass sich im Ergebnis am Verknüpfungspunkt der gewünschte Leistungskoeffizient ergibt.

Dank der Erfindung werden beachtliche Vorteile realisiert:
Erstens wird eine Kontrolle der Spannung an den einzelnen Windenergieanlagen ausgeübt. Die maximal möglichen Blindleistungen der einzelnen Windenergieanlagen können so ohne weiteres abgerufen werden. Es besteht keine Gefahr, dass es dabei zu Instabilitäten oder zu Beschädigungen von Komponenten kommt, da schädliche Spannungsabweichungen nicht auftreten. Sicherheitsabschläge sind nicht oder nur in verringertem Umfang erforderlich.
Zweitens tritt die bei bisherigen Konzepten auftretende Problematik nicht mehr auf, dass bei impulsartigen Spannungsänderungen im Netz (Spikes) zwar ein neues cos ϕ berechnet, aber wegen der begrenzten Kommunikationsgeschwindigkeit nicht mehr schnell genug an die einzelnen Windenergieanlagen übermittelt werden kann, so dass diese noch mit dem alten cos ϕ versuchen, den Spike nachzufahren. Dank der Erfindung verhalten sich auch bei derart schnellen Vorgängen die einzelnen Windenergieanlagen richtig, sie bleiben bei dem eingestellten Blindleistungssollwert.
Drittens braucht trotz Vorgabe eines bestimmten Sollwerts für den Leistungskoeffizient am Verknüpfungspunkt der Leistungskoeffizient der einzelnen Windenergieanlagen nicht jeweils einzeln genau vorgeschrieben zu werden. Dort stellt sich dank des Unterreglers das jeweils richtige Verhältnis von Wirk- zu Blindleistung selbständig ein. Damit wird auch ein robustes Verhalten des Windparks gegenüber einem Fehlverhalten bzw. unzureichender Blindleistungslieferung einzelner Windenergieanlagen erreicht.

Die Erfindung vereint damit auf elegante Weise Vorteile bezüglich robustem und schnellen Verhalten.

Zweckmäßigerweise weist der Oberregler eine Kompensationseinrichtung für die Verbindungsleitungen zu den Windenergieanlagen auf. Damit können bei der Berechnung der Sollspannung Einflüsse durch die Verbindungsleitungen ggf. einschließlich der Hauptleitung und/oder zwischengeschalteter Transformatoren berücksichtigt werden. Das ist deshalb von Bedeutung, weil sich bei geänderten (Soll-)Spannungen an den Verbindungsleitungen auch andere Verhältnisse bezüglich Spannungsabfall über die Verbindungsleitungen etc. ergeben.

Gemäß einer bevorzugten Ausführungsform weist der Oberregler einen Korrekturwertspeicher auf, in dem für die Windenergieanlagen individuelle Korrekturwerte, insbesondere Streckenparameter, der Verbindungsleitungen enthalten sind. Damit ist es ermöglicht, auf Unterschiede bei den (komplexen) Streckenparametern Rücksicht zu nehmen. Es kann der Sollwert für jede Windenergieanlage individuell an die jeweilige Übertragungsleitung mit ihren elektrischen Parametern angepasst werden. Das ist vor allem bei Windparks mit mehreren hintereinander an einer Leitung angeordneten Windenergieanlagen ein großer Vorteil. Es können auch andere Korrekturwerte individuell für jede Windenergieanlage aufgenommen sein. Damit ergibt sich eine bessere Führung der einzelnen Windenergieanlagen auch bei elektrisch stark unterschiedlichem Verhalten der einzelnen Windenergieanlagen mit dem Parkmaster.

Häufig wird es ausreichend sein, vorgegebene Werte in den Korrekturwertspeicher einzuspeichern. Vorteilhafterweise ist aber eine adaptive Erkennungseinrichtung für die individuellen Korrekturwerte, insbesondere die Streckenparameter, vorgesehen, die wahlweise auch mit der Kompensationseinrichtung zusammenwirkt. Damit ist eine aktive Vorgabe von Werten durch den Benutzer nicht mehr erforderlich. Das ist vor allem bei Windparks, die auf Grund ihrer Topologie schwierig zu bestimmen sind, ein erheblicher Vorteil. Außerdem passen sich die Korrekturwerte so an allmähliche Veränderungen automatisch an, die sich auf Grund von Umwelteinflüssen oder Alterung von Komponenten ergeben.

Zweckmäßigerweise ist die Verknüpfungsstelle am Hochspannungsnetz angeordnet und über einen Hochspannungstransformator mit der Hauptleitung verbunden. Vor allem für Windparks mit hoher installierter Leistung ist dies eine günstige Art der Netzanbindung. Sie bringt aber den Nachteil mit sich, dass Hochspannungsleitungen auf Grund ihrer nicht zu vernachlässigenden Kapazitäten - anders als bei Mittelspannungsleitungen - eine sog. natürliche Leistung haben, bei der sich ein optimaler Betrieb ergibt. Bei Abweichungen muss entsprechend mit Blindleistung kompensiert werden. Es ist günstig, wenn zu diesem Zweck die Messstelle hochspannungsseitig des Transformator angeordnet ist. Allerdings bedingt dies aufwendige und teure Hochspannungs-Messeinrichtungen. Vorzugsweise kann daher vorgesehen sein, die Messeinrichtungen hauptleitungsseitig des Hochspannungstransformators anzuordnen. Das ermöglicht, sofern die Übertragungseigenschaften des Hochspannungstransformators bekannt sind, die Verwendung preisgünstigerer Sensoren.

Vorzugsweise ist der verteilte Regler so ausgebildet, dass sein Führungsverhalten eine Zeitkonstante aufweist, die wesentlich größer ist als die von impulsartigen kurzen Spannungsschwankungen (Spannungstransienten). Das hat den Vorteil, dass impulsartige kurze Spannungsschwankungen ohne Einfluss auf den Regler bleiben. Weiter ist es damit ermöglicht, den Unterregler schnell reagierend auf Störungen auszulegen. Damit bleibt ein robustes Betriebsverhalten des Windparks auch unter gestörten Bedingungen erhalten.

Bei einer bewährten Ausführungsform weist der verteilte Regler eine Begrenzungseinrichtung für die Sollspannung auf. Damit wird sichergestellt, dass es nicht durch zu hohe Sollspannungen zu Schäden am Generator oder deren Umrichter kommt. Das ist insbesondere für solche Windenergieanlagen von Bedeutung, die an einer verhältnismäßig langen Verbindungsleitung angeschlossen sind. Dort kann wegen des komplexen Widerstands der Verbindungsleitung das Spannungsniveau anders liegen als bei dem Parkmaster, insbesondere kann es höher sein. Ohne Begrenzung könnte es leicht zu Schäden kommen, die mit der Begrenzung verhindert werden. Zweckmäßigerweise ist die Begrenzungseinrichtung an dem jeweiligen Unterregler vorgesehen. Das ermöglicht eine verbesserte individuelle Abstimmung auf die einzelnen Windenergieanlagen. Es kann aber auch eine Anordnung am Oberregler vorgesehen sein.

Zweckmäßigerweise ist ein von dem Unterregler zum Oberregler führender Rückkanal zur Signalrückführung vorgesehen, der ein vom Unterregler ausgegebenes Überlastsignal übermittelt. Damit ist dem Oberregler signalisiert, wenn eine Windenergieanlage nicht die gewünschte Blindleistung liefern kann. Damit ist der Oberregler in die Lage versetzt, entsprechende Ausgleichsmaßnahmen in Bezug auf die anderen Windenergieanlagen durchzuführen.

Vorzugsweise sind zusätzliche Phasenschieber vorgesehen. Sie können auf verschiedene, an sich bekannte Weise ausgebildet sein. Bewährt sind Kondensatorsätze an den Windenergieanlagen. Damit wird zum einen ein vergrößerter Stellbereich für die Blindleistungsbereitstellung erreicht. Zum anderen kann die Häufigkeit verringert werden, mit der der verteilte Regler schalten muss. Das ermöglicht einen materialschonenderen Betrieb des Windparks.

Die Erfindung bezieht sich ferner auf ein entsprechendes Verfahren. Zur näheren Beschreibung wird auf obige Ausführungen verwiesen.

Die Erfindung wird nachfolgend unter Bezugnahme auf die Zeichnung näher erläutert, in der ein vorteilhaftes Ausführungsbeispiel dargestellt ist. Es zeigen:
- Fig. 1: eine schematische Darstellung eines Ausführungsbeispiels eines erfindungsgemäßen Windparks mit Parkmaster und Windenergieanlagen;
- Fig. 2: eine schematische Darstellung des Parkmasters mit einem Oberregler gemäß dem in Fig. 1 dargestellten Ausführungsbeispiel; und
- Fig. 3: eine schematische Darstellung einer Steuereinrichtung der Windenergieanlage mit einem Unterregler gemäß dem in Fig. 1 dargestellten Ausführungsbeispiel.

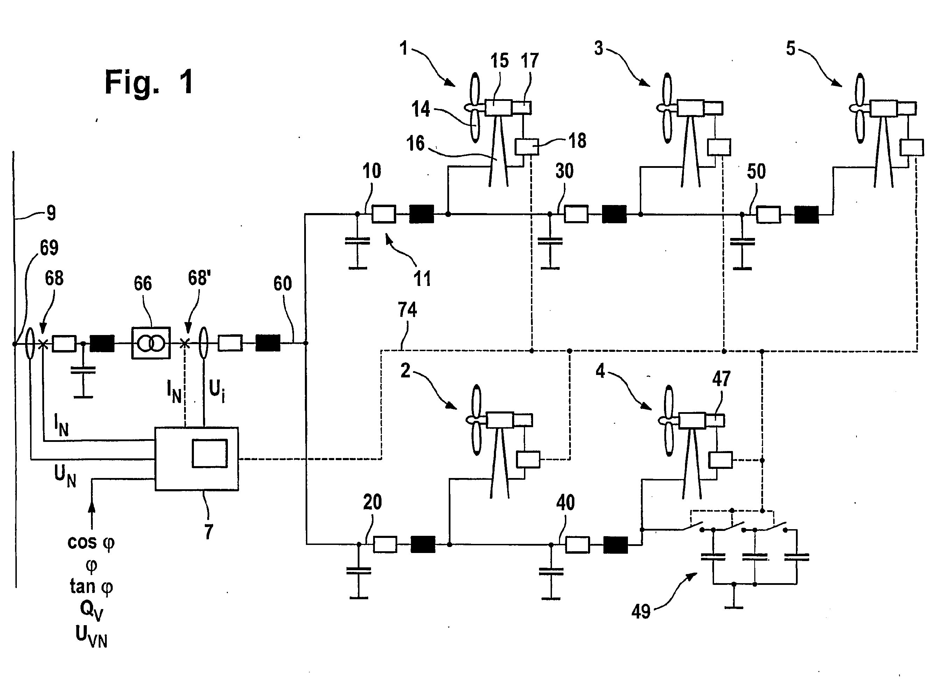

In Fig. 1 ist ein Ausführungsbeispiel für einen erfindungsgemäßen Windpark dargestellt. Es umfasst eine Mehrzahl von im dargestellten Ausführungsbeispiel fünf Windenergieanlagen (1-5) und einen zentralen Leitrechner (Parkmaster) 7. Die Windenergieanlagen 1-5 sind über Verbindungsleitungen 10, 20, 30, 40, 50 mit einem Ende einer Hauptleitung 60 verbunden.

Der Aufbau der Windenergieanlagen 1-5 wird beispielhaft an der Windenergieanlage 1 erläutert. Die Windenergieanlage 1 umfasst einen Rotor 14, der drehbar an einem Maschinengehäuse 15 an der Spitze eines Turms 16 angeordnet ist. Der Rotor 14 treibt einen Generator (nicht dargestellt) an. Es handelt vorzugsweise um einen doppelt gespeisten Asynchrongenerator, jedoch sind auch andere Bauarten möglich. Mit dem Generator ist ein Umrichter 17 verbunden. Er wandelt die von dem Generator gelieferte elektrische Leistung in einen dreiphasigen Drehstrom mit fester Frequenz (Netzfrequenz) um. Der Betrieb der Windenergieanlage 1 ist kontrolliert von einer Steuereinrichtung 18. Sie wirkt über geeignete (nicht dargestellte) Steuerleitungen auf die einzelnen Komponenten der Windenergieanlage 1 ein. Weiter ist an der Windenergieanlage 1 ein Transformator (nicht dargestellt) vorgesehen, der die von dem Umrichter 17 ausgegebene Spannung auf ein höheres Niveau transformiert.

Die Weiterleitung der von der Windenergieanlage 1 erzeugten elektrischen Energie an die Hauptleitung 60 erfolgt über die Verbindungsleitung 10. Sie ist in Fig. 1 mit ihrem elektrischen Ersatzschaltbild dargestellt. Sie weist jeweils eine als konzentriertes Element dargestellte Induktivität, Impedanz und Kapazität auf. Sie werden zusammengefasst als komplexe Impedanz 11 bezeichnet. Die Verbindungsleitung 10 der Windenergieanlage 1 ist unmittelbar an ein Ende der Hauptleitung 60 angeschlossen. Die an diesem Ast als nächstes angeordnete Windenergieanlage 3 ist über ihre Verbindungsleitung 30 und weiter über die Verbindungsleitung 10 an die Hauptleitung 60 angeschlossen. Entsprechend ist die Windenergieanlage 5 über ihre Verbindungsleitung 50 und die Verbindungsleitungen 30 und 10 an die Hauptleitung 60 angeschlossen.

An dem anderen Ende der Hauptleitung 60 ist über einen Verknüpfungspunkt 69 ein Energieversorgungsnetz (Netz) 9 eines Energieversorgungsunternehmens (EVU) angeschlossen. Der Verknüpfungspunkt 69 dient zur Einspeisung der von den Windenergieanlagen 1-5 erzeugten und in die Hauptleitung 60 geleiteten elektrischen Leistung. Je nach der Ausführung des Windparks kann die Hauptleitung 60 eine beträchtliche Länge aufweisen. Sie kann mehrere Kilometer betragen, bei Offshore-Windparks sogar über 50 km. Das Netz 9 ist in dem dargestellten Ausführungsbeispiel ein Hochspannungsnetz. Zur Anhebung der auf Mittelspannungsebene liegenden Spannung der Hauptleitung 60 ist ein Hochspannungstransformator 66 vorgesehen.

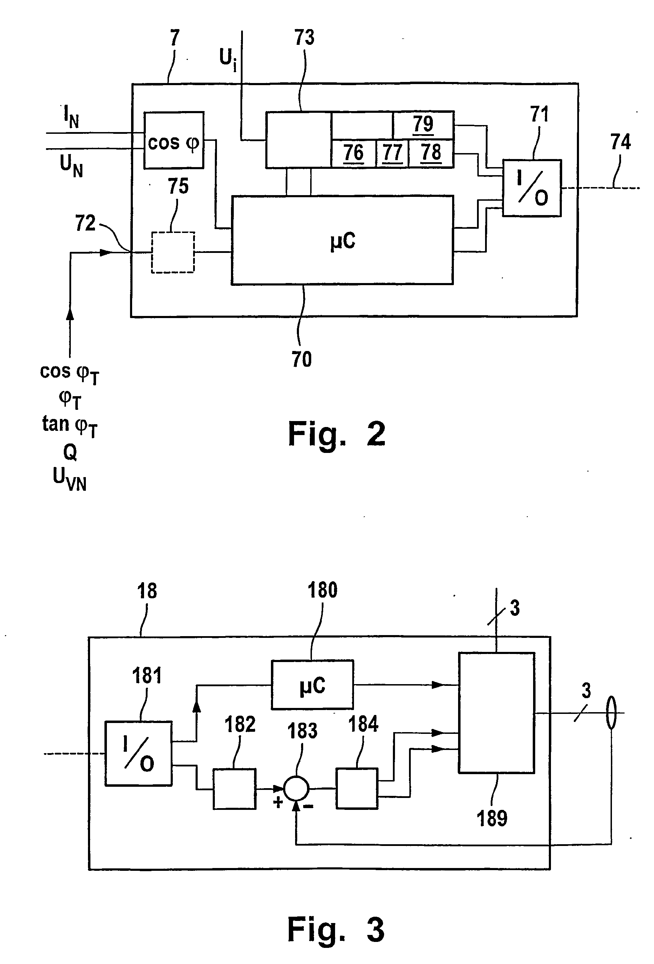

Zur Kontrolle über die in das Netz 9 eingespeiste elektrische Leistung ist der Parkmaster 7 vorgesehen. Er übt eine Leitfunktion auf die Windenergieanlagen 1-5 aus. Der Parkmaster 7 umfasst einen Leitrechner 70, eine Ein-/Ausgabeeinheit 71 und einen Oberregler 73 als Bestandteil der erfindungsgemäßen verteilten Regelung. In dem Leitrechner 70 sind Leitstrategien für den Windpark implementiert, zusätzlich weist er einen Eingang 72 für Leitanweisungen des Betreibers des EVU-Netz 9 auf. Das ist in Fig. 2 exemplarisch durch einen Eingang für einen gewünschten Leistungskoeffizienten (ϕ, cos ϕ, tan ϕ, Blindleistungswert Q oder Netzspannungsvorgabewert U_{VN}) dargestellt. Wird der Leistungskoeffizient wie bei Hochspannungsnetzen üblich über den Netzspannungsvorgabewert einstellt, ist zusätzlich ein Blindleistungsstatikmodul 75 vorgesehen. Es enthält eine vorgebbare Kennlinie, welche die Vorgabespannung in Bezug setzt mit einer Blindleistung. Weiter sind an den Parkmaster 7 Messeinrichtungen 68 für die in das Netz abgegebene Leistung und/oder den Leistungskoeffizienten angeschlossen. In dem dargestellten Ausführungsbeispiel sind dies ein Spannungssensor für die Netzspannung Un und ein Stromsensor für den in das Netz eingespeisten Strom In. Es kann aber auch vorgesehen sein, die Messeinrichtung teilweise (68') oder vollständig hauptleitungsseitig des Hochspannungstransformators 66 anzuordnen. Das hat den Vorteil, dass einfachere, für Mittelspannungsniveau ausgelegte Sensoren verwendet werden können.

Die erfindungsgemäße verteilte Regelung weist als wesentliche Komponenten den Oberregler 73 am Parkmaster 7 und Unterregler an den einzelnen Windenergieanlagen 1-5 auf. Der Oberregler 73 ermittelt aus dem gewünschten Leistungskoeffizient einen Wert für die Sollspannung Usoll der Hauptleitung 60. Dieser Wert wird über die Ein-/Ausgabeeinrichtung 71 und die Kommunikationsleitungen 74 an die Unterregler der Steuereinrichtungen der einzelnen Windenergieanlagen 1-5 übermittelt. Der Aufbau und die Funktionsweise der Steuereinrichtungen werden nachfolgend an dem in Fig. 3 dargestellten Beispiel der Steuereinrichtung 18 der Windenergieanlage 1 erläutert.

Die Steuereinrichtung 18 umfasst eine Ein-/Ausgabeeinheit 181, eine Betriebsführungseinheit 180, eine Begrenzungseinrichtung 182 und einen Unterregler 184 sowie eine Umrichteransteuerung 189. An die Ein-/Ausgabeeinheit 181 sind die Kommunikationsleitungen 74 angeschlossen. Vom Parkmaster 7 übermittelte Vorgaben und Steuerkommandos werden je nach Signal an die Betriebsführungseinheit 180 und/oder den Unterregler 184 weitergeleitet. Das Signal für die Sollspannung Usoll wird über die Begrenzungseinrichtung 182 geführt. Sie ist dazu ausgebildet, überhöhte Werte auf ein noch zulässiges Maß zu begrenzen. Weiter wird es über eine Subtraktionsstelle 183 an den Unterregler 184 angelegt. Er berechnet aus dem Signal für die Sollspannung Usoll geeignete Ansteuersignale für die Umrichteransteuerung 189. Die Ansteuersignale werden falls erforderlich durch geeignete Maßnahmen, bspw. Filter, modifiziert, um eine gegenseitige Beeinflussung der Unterregler mehrerer Windenergieanlagen zu vermeiden. In dem dargestellten Ausführungsbeispiel wird die Sollspannung weitergeführt als Signal für die Ausgangsspannung des Umrichters 17 (es können auch andere Größen verwendet werden, beispielsweise die Blindleistung). Die Betriebsführungseinheit 180 gibt in dem Ausführungsbeispiel ein Signal für eine Sollwirkleistung an die Umrichteransteuerung 189 aus. Der Umrichter 17 wird von der Umrichteransteuerung 189 in an sich bekannte Weise gemäß den eingestellten Ansteuersignalen betrieben. Er stellt an seinem Ausgang elektrische Wirk- und Blindleistung P bzw. Q bei einer Ausgangsspannung U gemäß den eingestellten Werten bereit und speist sie in die Verbindungsleitung 10 ein. Die Ausgangsspannung wird gemessen und zu der Subtraktionsstelle 183 zurückgeführt. Eventuelle Abweichungen vom Sollwert Usoll können so ausgeregelt werden. - Die Windenergieanlagen 2-5 des Windparks werden in entsprechender Weise betrieben.

Die Verbindungsleitungen 10, 20, 30, 40, 50 weisen komplexe Impedanzen auf. Veränderungen der von den Windenergieanlagen abgegebenen Spannung führen auch zu einem veränderten Spannungsabfall über die Verbindungsleitungen 10, 20, 30, 40, 50. Um daraus resultierende störende Einflüsse auszugleichen, ist eine Kompensationseinrichtung 77 an dem Oberregler 73 vorgesehen. Sie verändert die berechnete Sollspannung entsprechend dem über die komplexe Impedanz 11 erwartenden Spannungsabfall. Damit wird der Einfluss der Verbindungsleitungen 10, 20, 30, 40, 50 auf die verteilte Regelung vermindert. Da die einzelnen Windenergieanlagen 1-5 an unterschiedlichen Orten an den Verbindungsleitungen angeordnet sind, ergeben sich für jede der Windenergieanlagen andere komplexe Impedanzen bis zur Hauptleitung 60. Das führt dazu, dass die Spannungsverhältnisse an einzelnen Windenergieanlagen 1-5 voneinander abweichen. So tritt insbesondere in Bezug auf die hinten gelegene Windenergieanlage 5 ein hoher Spannungsabfall über die Verbindungsleitungen 10, 30, 50 auf. Das birgt die Gefahr, dass - bei Vorgabe eines identischen Werts für die Sollspannung Usoll - die Ausgangsspannung der Windenergieanlage 5 einen unzulässig hohen Wert erreicht. Um dem entgegen zu wirken, ist ein Korrekturwertspeicher 78 vorgesehen. In ihm sind für jede der Windenergieanlagen 1-5 die sich aus den unterschiedlichen komplexen Impedanzen der Verbindungsleitungen 10, 20, 30, 40, 50 ergebenden Spannungsabfälle individuell berücksichtigt. Die Sollspannung Usoll kann mit dem entsprechenden Korrekturwert so modifiziert werden, dass der Einfluss der jeweiligen Verbindungsleitung zu der einzelnen Windenergieanlage ausgeglichen ist. Die jeweiligen Korrekturwerte werden von einer adaptiven Erkennungseinrichtung 76 durch Identifikationsverfahren ermittelt und in den Korrekturwertspeicher 78 geschrieben. Damit werden auch dann gültige Korrekturwerte ermittelt, wenn sich die Verhältnisse auf den Verbindungsleitungen langsam ändern (zum Beispiel durch Alterung oder Umwelteinflüsse) oder sie auf Grund der Topologie nur schwierig zu berechnen sind.

An den Windenergieanlagen sind optional Kondensatorsätze 49 angeordnet. In Fig. 1 ist aus Gründen der Übersichtlichkeit nur einer an der Windenergieanlage 4 dargestellt; an den übrigen Windenergieanlagen können sie entsprechend vorgesehen sein. Sie bieten eine zusätzliche Möglichkeit zur Bereitstellung von Blindleistung. Damit wird der Arbeitsbereich für die erfindungsgemäße verteilte Regelung vergrößert. Ferner kann durch die Kondensatorsätze 49 eine grobe Voreinstellung der Blindleistung erfolgen. Zur Betätigung der Kondensatorsätze 49 ist eine Phasenschieberschalteinheit 79 an dem Oberregler 73 vorgesehen. Sie kann als Tiefpass- oder als Moving-Average-Filter ausgeführt sein. Damit wird erreicht, dass die Anzahl der von dem Umrichter 47 durchzuführenden Schaltvorgänge zur Anpassung der Blindleistung verringert sind. Das trägt positiv zum Systemverhalten (insbesondere Netzflicker) und Lebensdauer bei.

## Patentansprüche

1. Windpark mit mindestens zwei Windenergieanlagen (1-5), die jeweils einen Rotor (14), einen damit angetriebenen Generator und eine Steuereinrichtung (18) aufweisen und die über Verbindungsleitungen (10) mit einer Hauptleitung (60) verbunden sind,
einer Verknüpfungsstelle (69), welche die Hauptleitung (60) mit einem Energieübertragungsnetz (9) verbindet, und
einem Parkmaster (7), der zur Blindleistungsregelung ausgebildet ist und Kommunikationsleitungen (74) zur Übermittlung von Steuersignalen an die Windenergieanlagen (1-5) aufweist,
**dadurch gekennzeichnet, dass**
die Blindleistungsregelung als verteilter Regler ausgeführt ist, umfassend
einen Oberregler (73) am Parkmaster (7), der dazu ausgebildet ist, zur Einstellung eines globalen Leistungskoeffizienten der in das Energieübertragungsnetz (69) abgegebenen Leistung eine Sollspannung (Usoll) zu ermitteln und als Signal über die Kommunikationsleitungen (74) auszugeben, und
Unterregler (184) an den Windenergieanlagen (1-5), die jeweils dazu ausgebildet sind, aus dem Signal für die Sollspannung lokale Blindleistungssollwerte zu berechnen, die tatsächlich abgegebene Spannung der Windenergieanlage (1-5) zu erfassen und nach Vergleich mit der Sollspannung (Usoll) die lokalen Blindleistungssollwerte zu korrigieren.

2. Windpark nach Anspruch 1,
**dadurch gekennzeichnet, dass**
der Oberregler (73) eine Kompensationseinrichtung (77) für die Verbindungsleitungen (10, 20, 30, 40, 50) zu den Windenergieanlagen (1-5) aufweist.

3. Windpark nach Anspruch 1 oder 2,
**dadurch gekennzeichnet, dass**
der Oberregler (73) einen Korrekturwertspeicher (78) aufweist, in dem insbesondere für die Windenergieanlagen (1-5) individuelle Korrekturwerte, insbesondere Streckenparameter der Verbindungsleitungen (10, 20, 30, 40, 50), enthalten sind.

4. Windpark nach Anspruch 2 oder 3,
**dadurch gekennzeichnet, dass**
eine adaptive Erkennungseinrichtung (76) für die Kompensationseinrichtung (77) und/oder die individuellen Korrekturwerte vorgesehen ist.

5. Windpark nach einem der vorhergehenden Ansprüche,
**dadurch gekennzeichnet, dass**
die Verknüpfungsstelle (69) am Hochspannungsnetz (9) angeordnet ist und über einen Hochspannungstransformator (66) mit der Hauptleitung (60) verbunden ist.

6. Windpark nach Anspruch 5,
**dadurch gekennzeichnet, dass**
die Messeinrichtung (68') hauptleitungsseitig des Hochspannungstransformators (66) angeordnet sind.

7. Windpark nach einem der vorhergehenden Ansprüche,
**dadurch gekennzeichnet, dass**
das Führungsverhalten des verteilten Reglers eine Zeitkonstante aufweist, die wesentlich größer ist als die von Spannungstransienten.

8. Windpark nach einem der vorhergehenden Ansprüche,
**dadurch gekennzeichnet, dass**
der verteilte Regler eine Begrenzungseinrichtung (182) für die Sollspannung (Usoll) aufweist.

9. Windpark nach Anspruch 8,
**dadurch gekennzeichnet, dass**
die Begrenzungseinrichtung (182) an dem Unterregler (184) vorgesehen ist.

10. Windpark nach einem der vorhergehenden Ansprüche,
**dadurch gekennzeichnet, dass**
zusätzliche passive Phasenschieber vorgesehen sind.

11. Windpark nach Anspruch 10,
**dadurch gekennzeichnet, dass**
als Phasenschieber Kondensatorsätze (49) an den Windenergieanlagen (1-5) vorgesehen sind.

12. Verfahren zum Betreiben eines Windparks mit mindestens zwei Windenergieanlagen (1-5), die jeweils einen Rotor (14), einen damit angetriebenen Generator und eine Steuereinrichtung (18) aufweisen und die über Verbindungsleitungen (10, 20, 30, 40, 50) mit einer Hauptleitung (60) verbunden sind,
einer Verknüpfungsstelle (69), welche die Hauptleitung (60) mit einem Energieübertragungsnetz (9) verbindet, und
einem Parkmaster (7), der zur Blindleistungsregelung ausgebildet ist und Kommunikationsleitungen (74) zur Übermittlung von Steuersignalen an die Windenergieanlagen (1-5) aufweist,
**gekennzeichnet durch**
Regeln der Blindleistung mittels einer verteilten Regelung, umfassend
einen Oberregler (73) am Parkmaster (7) zum Einstellen eines globalen Leistungskoeffizienten der in das Energieübertragungsnetz (69) abgegebenen Leistung, Ermitteln einer Sollspannung (Usoll) und Ausgeben der Sollspannung (Usoll) als Signal über die Kommunikationsleitungen (74), und
einen Unterregler (184) an den Windenergieanlagen (1-5), der jeweils aus dem Signal für die Sollspannung (Usoll) lokale Blindleistungssollwerte berechnet, die tatsächlich abgegebene Spannung der Windenergieanlage (1-5) erfasst und mit der Sollspannung (Usoll) vergleicht, um die lokalen Blindleistungssollwerte zu korrigieren.

## Claims

1. Windpark having at least two wind energy installations (1-5), which each have a rotor (14), a generator driven by it and a control device (18), and which are connected via connecting lines (10) to a main line (60),
a linking point (69) which connects the main line (60) to a power transmission network (9) and
a parkmaster (7), which is designed for power factor control and has communication lines (74) for transmission of control signals to the wind energy installations (1-5),
**characterized in that**
the power-factor control is in the form of a distributed regulator, having
a higher-level regulator (73) at the parkmaster (7) which is designed to determine a nominal voltage (Usoll) in order to set a global power coefficient for the power which is emitted to the power transmission network (6), and to emit this as a signal via the communication lines (74), and lower-level regulators (184) at the wind energy installations (1-5), which are in each case designed to calculate a local wattless-component nominal value from the signal for the nominal voltage, to detect the actual emitted voltage from the wind energy installation (1-5), and to correct the local wattless-component nominal values after comparison with the nominal voltage (Usoll).

2. Windpark according to Claim 1,
**characterized in that**
the higher-level regulator (73) has a compensation device (77) for the connecting lines (10, 20, 30, 40, 50) to the wind energy installations (1-5).

3. Windpark according to Claim 1 or 2,
**characterized in that**
the higher-level regulator (73) has a correction-value memory (78) which, in particular, contains individual correction values for the wind energy installations (1-5), in particular section parameters for the connecting lines (10, 20, 30, 40, 50).

4. Windpark according to Claim 2 or 3,
**characterized in that**
an adaptive identification device (76) is provided for the compensation device (77) and/or for the individual correction values.

5. Windpark according to one of the preceding claims,
**characterized in that**
the linking point (69) is arranged on the high-voltage network (9) and is connected to the main line (60) via a high-voltage transformer (66).

6. Windpark according to Claim 5,
**characterized in that**
the measurement device (68') is arranged on the main-line side of the high-voltage transformer (66).

7. Windpark according to one of the preceding claims,
**characterized in that**
the control response of the distributed regulator has a time constant which is considerably longer than that of voltage transients.

8. Windpark according to one of the preceding claims,
**characterized in that**
the distributed regulator has a limiting device (182) for the nominal voltage (Usoll).

9. Windpark according to Claim 8,
**characterized in that**
the limiting device (182) is provided at the lower-level regulator (184).

10. Windpark according to one of the preceding claims,
**characterized in that**
additional passive phase shifters are provided.

11. Windpark according to Claim 10,
**characterized in that**
capacitor banks (49) are provided as phase shifters for the wind energy installations (1-5).

12. Method for operation of a windpark having at least two wind energy installations (1-5), which each have a rotor (14), a generator driven by it and a control device (18), and which are connected via connecting lines (10, 20, 30, 40, 50) to a main line (60),
a linking point (69) which connects the main line (60) to a power transmission network (9) and
a parkmaster (7), which is designed for power factor control and has communication lines (74) for transmission of control signals to the wind energy installations (1-5),
**characterized by**
power-factor control by means of a distributed control system, comprising
a higher-level regulator (73) at the parkmaster (7) for setting a nominal voltage (Usoll) in order to set a global power coefficient for the power which is emitted to the power transmission network (69), and to emit this as a signal via the communication lines (74), and
a lower-level regulator (184) at the wind energy installations (1-5), which is in each case designed to calculate local wattless-components nominal values from the signal for the nominal voltage, to detect the actual emitted voltage from the wind energy installation (1-5), and to correct the local wattless-component nominal values after comparison with the nominal voltage (Usoll).

## Revendications

1. Parc éolien comprenant au moins deux installations d'énergie éolienne (1 à 5) qui présentent respectivement un rotor (14), un générateur entraîné par celui-ci et un dispositif de commande (18) et qui sont raccordées par des lignes de raccordement (10) à une ligne principale (60),
un point de jonction (69) qui raccorde la ligne principale (60) à un réseau de transmission d'énergie (9), et
un poste de commande (7) qui est réalisé pour réguler la puissance réactive et présente des lignes de communication (74) pour transmettre des signaux de commande aux installations d'énergie éolienne (1 à 5),
**caractérisé en ce que**
la régulation de puissance réactive est mise en oeuvre sous la forme d'un régulateur distribué, comprenant
un régulateur primaire (73) au niveau du poste de commande (7), qui est réalisé pour déterminer une tension de consigne (Usoll) pour régler un coefficient de puissance global de la puissance fournie au réseau de transmission d'énergie (69) et pour la délivrer sous forme de signal par l'intermédiaire des lignes de communication (74), et
des régulateurs secondaires (184) au niveau des installations d'énergie éolienne (1 à 5), qui sont respectivement réalisés pour calculer à partir du signal pour la tension de consigne des valeurs de consigne de puissance réactive locales, pour détecter la tension réellement fournie par l'installation d'énergie éolienne (1 à 5), et pour corriger les valeurs de consigne de puissance réactive locales après comparaison avec la tension de consigne (Usoll).

2. Parc éolien selon la revendication 1, **caractérisé en ce que** le régulateur primaire (73) présente un dispositif de compensation (77) pour les lignes de raccordement (10, 20, 30, 40, 50) aux installations d'énergie éolienne (1 à 5).

3. Parc éolien selon la revendication 1 ou 2, **caractérisé en ce que** le régulateur primaire (73) présente une mémoire de valeurs de correction (78) dans laquelle sont contenues des valeurs de correction individuelles, en particulier pour les installations d'énergie éolienne (1 à 5), en particulier des paramètres de tronçon des lignes de raccordement (10, 20, 30, 40, 50).

4. Parc éolien selon la revendication 2 ou 3, **caractérisé en ce qu'**un dispositif de reconnaissance adaptatif (76) est prévu pour le dispositif de compensation (77) et/ou les valeurs de correction individuelles.

5. Parc éolien selon l'une quelconque des revendications précédentes, **caractérisé en ce que** le point de jonction (69) est disposé au niveau du réseau haute tension (9) et est raccordé à la ligne principale (60) par l'intermédiaire d'un transformateur haute tension (66).

6. Parc éolien selon la revendication 5, **caractérisé en ce que** le dispositif de mesure (68') est disposé du côté de la ligne principale du transformateur haute tension (66).

7. Parc éolien selon l'une quelconque des revendications précédentes, **caractérisé en ce que** le comportement de pilotage du régulateur distribué présente une constante de temps qui est nettement supérieure à celle de la transitoire de tension.

8. Parc éolien selon l'une quelconque des revendications précédentes, **caractérisé en ce que** le régulateur distribué présente un dispositif de limitation (182) pour la tension de consigne (Usoll).

9. Parc éolien selon la revendication 8, **caractérisé en ce que** le dispositif de limitation (182) est prévu au niveau du régulateur secondaire (184).

10. Parc éolien selon l'une quelconque des revendications précédentes, **caractérisé en ce que** des déphaseurs passifs supplémentaires sont prévus.

11. Parc éolien selon la revendication 10, **caractérisé en ce que** des jeux de condensateurs (49) sont prévus en tant que déphaseurs au niveau des installations d'énergie éolienne (1 à 5).

12. Procédé d'exploitation d'un parc éolien comprenant au moins deux installations d'énergie éolienne (1 à 5), qui présentent respectivement un rotor (14), un générateur entraîné par celui-ci et un dispositif de commande (18) et qui sont raccordées par des lignes de raccordement (10, 20, 30, 40, 50) à une ligne principale (60),
un point de jonction (69) qui raccorde la ligne principale (60) à un réseau de transmission d'énergie (9), et
un poste de commande (7) qui est réalisé pour réguler la puissance réactive et présente des lignes de communication (74) pour transmettre des signaux de commande aux installations d'énergie éolienne (1 à 5),
**caractérisé par** les étapes consistant à
réguler la puissance réactive au moyen d'une régulation distribuée, comprenant
un régulateur primaire (73) au niveau du poste de commande (7) qui est réalisé pour déterminer une tension de consigne (Usoll) pour régler un coefficient de puissance global de la puissance fournie au réseau de transmission d'énergie (69) et pour délivrer la tension de consigne (Usoll) sous forme de signal par l'intermédiaire des lignes de communication (74), et
un régulateur secondaire (184) au niveau des installations d'énergie éolienne (1 à 5) qui calcule respectivement à partir du signal pour la tension de consigne des valeurs de consigne de puissance réactive locales, détecte la tension réellement délivrée par l'installation d'énergie éolienne (1 à 5) et la compare à la tension de consigne (Usoll) afin de corriger les valeurs de consigne de puissance réactive locales.
